# EUROPÄISCHE PATENTANMELDUNG

(11) **EP 4 841 157 A1**
(43) Veröffentlichungstag der Anmeldung: **18.11.2026**
(21) Anmeldenummer: 26178177.7
(22) Anmeldetag: 12.05.2026
(51) Int. Cl.: F21V 21/088, F21V 17/16, F21V 21/02, F16B 2/24

(54) **HALTERUNG FÜR EINE LEUCHTE**

(30) Priorität: 13.05.2025 AT 5004725 U
(71) Anmelder: Richard Lesonitzky GmbH, 1180 Wien (AT)
(72) Erfinder: LESONITZKY, Richard, 1180 Wien (AT)
(74) Vertreter: SONN Patentanwälte GmbH & Co KG

(57) **Zusammenfassung**

Halterung für eine Leuchte (7) umfassend ein Halteteil (1; 1') und ein Einführteil (2; 2'; 2''), wobei das Halteteil (1; 1') einen Einführschlitz (4; 4'; 4'') aufweist, in den ein plattenförmiger Einführabschnitt (3; 3'; 3'') des Einführteils (2; 2'; 2'') entlang eines Einführwegs einführbar ist, wobei in den Einführweg ein federnd auslenkbarer Rastkörper (8) des Halteteils (1; 1') ragt, der beim Einführen des plattenförmigen Einführabschnitts (3; 3'; 3'') federnd ausgelenkt wird und in eine Rastausnehmung (5) des plattenförmigen Einführabschnitts (3; 3'; 3'') einrastet.

## Beschreibung

Die Erfindung betrifft eine Halterung für eine Leuchte, insbesondere eine lösbare Halterung zur schnellen und sicheren Montage und Demontage von Leuchten an Gegenständen wie Wänden, Decken oder Profilschienen. Die Erfindung betrifft ferner eine Leuchte, die mit einer solchen Halterung ausgestattet ist.

Im Stand der Technik sind vielfältige Halterungssysteme für Leuchten bekannt. Einfache Lösungen umfassen beispielsweise Schraubverbindungen, die zwar eine feste Verbindung gewährleisten, jedoch oft zeitaufwendig in der Montage und Demontage sind und in der Regel Werkzeuge erfordern. Dies ist insbesondere nachteilig, wenn Leuchten häufig montiert, demontiert oder umpositioniert werden müssen.

Des Weiteren sind Klemm- oder Schnappverbindungen bekannt, die eine schnellere Montage ermöglichen sollen. Viele dieser bekannten Schnappverbindungen basieren auf einfachen federnden Elementen, die in eine entsprechende Aufnahme eingreifen. Solche Verbindungen können jedoch Nachteile hinsichtlich der Stabilität und Spielfreiheit der Verbindung aufweisen. Insbesondere bei dynamischen Belastungen oder nach mehrmaligem Gebrauch kann es zu Spiel in der Verbindung kommen, was zu einer unerwünschten Bewegung oder Ausrichtung der Leuchte führen kann. Zudem ist die Haltekraft solcher Verbindungen oft begrenzt oder die Entriegelung kann umständlich sein.

Für die Befestigung von Leuchten an spezifischen Trägerstrukturen, wie beispielsweise Profilschienen in Regalsystemen, Messeständen oder abgehängten Decken, werden oft spezielle Adapterstücke verwendet. Diese werden beispielsweise in die Profile eingeschoben oder eingehängt und die Leuchte dann am Adapterstück befestigt. Auch hier kann die Verbindung zwischen Leuchte und Adapterstück oder zwischen Adapterstück und Profil Schwachstellen aufweisen, beispielsweise durch Toleranzen, die zu Spiel führen, oder durch eine komplexe und nicht intuitive Handhabung beim Einrasten oder Lösen.

Die bekannten Systeme weisen somit oft den Nachteil auf, dass sie entweder eine aufwendige Montage erfordern, keine ausreichend spielfreie und sichere Halterung gewährleisten oder sich nur umständlich wieder lösen lassen. Oftmals ist ein Kompromiss zwischen einfacher Handhabung und stabiler, sicherer Fixierung notwendig. Insbesondere fehlt es an einer Lösung, die eine sehr einfache, idealerweise werkzeuglose oder mit minimalem Werkzeugaufwand bedienbare Rastverbindung ermöglicht, die gleichzeitig eine hohe Stabilität und eine im Wesentlichen spielfreie und formschlüssige Aufnahme auch im Bereich der Rastmittel gewährleistet.

Der vorliegenden Erfindung liegt daher die Aufgabe zugrunde, eine Halterung für eine Leuchte sowie eine Leuchte mit einer solchen Halterung bereitzustellen, welche die Nachteile des Standes der Technik überwindet.

Zur Lösung dieser Aufgabe wird eine Halterung für eine Leuchte mit den Merkmalen des Anspruchs 1 vorgeschlagen. Die erfindungsgemäße Halterung für eine Leuchte umfasst ein Halteteil und ein Einführteil. Das Halteteil ist mit einem Einführschlitz versehen. Das Einführteil weist einen plattenförmigen Einführabschnitt auf, der dazu bestimmt ist, entlang eines definierten Einführwegs in diesen Einführschlitz eingeführt zu werden. Erfindungswesentlich ragt in diesen Einführweg ein federnd auslenkbarer Rastkörper, der Teil des Halteteils ist. Beim Einführen des plattenförmigen Einführabschnitts wird dieser Rastkörper durch den Einführabschnitt federnd ausgelenkt. Nachdem der Einführabschnitt eine bestimmte Position erreicht hat, rastet der ausgelenkte Rastkörper in eine korrespondierende Rastausnehmung ein, die im plattenförmigen Einführabschnitt vorgesehen ist.

Durch diese erfindungsgemäße Ausgestaltung wird eine besonders einfache und intuitive Montage ermöglicht. Der Benutzer muss lediglich den plattenförmigen Einführabschnitt in den Einführschlitz schieben, woraufhin die Verrastung selbsttätig erfolgt. Dies führt zu einer erheblichen Zeitersparnis bei der Montage und Demontage. Die federnde Auslenkung des Rastkörpers und das anschließende Einrasten in die Rastausnehmung sorgen für eine definierte und zuverlässige Verbindung zwischen Halteteil und Einführteil. Die Leuchte wird sicher gehalten, und die Gefahr einer unbeabsichtigten Lösung wird minimiert. Gleichzeitig ist die Konstruktion robust und kann kostengünstig realisiert werden, da sie auf einfachen mechanischen Prinzipien beruht.

Eine bevorzugte Weiterbildung sieht vor, dass der plattenförmige Einführabschnitt im eingerasteten Zustand im Wesentlichen spielfrei und formschlüssig im Schlitz des Halteteils angeordnet ist. Dies erhöht die Stabilität der Verbindung erheblich und verhindert unerwünschte Bewegungen oder Vibrationen der Leuchte. Eine präzise Ausrichtung der Leuchte ist somit gewährleistet. Die spielfreie und formschlüssige Anordnung wird durch eine genaue Abstimmung der Dimensionen des Schlitzes und des Einführabschnitts sowie durch die Positionierung des Rastkörpers und der Rastausnehmung erreicht.

Gemäß einer vorteilhaften Ausgestaltung ist der plattenförmige Einführabschnitt im eingerasteten Zustand so im Schlitz angeordnet, dass der Einführabschnitt rund um die Rastausnehmung im Schlitz aufgenommen ist. Dies bedeutet, dass der Bereich des Einführabschnitts, der die Rastausnehmung umgibt, an allen seinen Seiten, also umlaufend, von den Innenwänden des Schlitzes gehalten und geführt wird. Dadurch wird eine besonders gute Abstützung des Einführabschnitts im Bereich der Krafteinleitung durch den Rastkörper erreicht. Dies trägt weiter zur Spielfreiheit und zur Stabilität der Verbindung bei und verhindert ein Verkanten oder Verbiegen des Einführabschnitts im Bereich der Rastausnehmung. Die flächige Aufnahme des Einführabschnitts rund um die Rastausnehmung im Schlitz sorgt für eine gleichmäßige Lastverteilung.

Ferner ist es vorteilhaft, wenn das Einführteil einen im Wesentlichen L-förmigen Querschnitt aufweist, wobei einer der Schenkel dieses L-Profils von dem plattenförmigen Einführabschnitt gebildet wird. Diese L-Form bietet zum einen eine gute Stabilität für das Einführteil selbst und ermöglicht zum anderen eine einfache Befestigung des anderen Schenkels an der Leuchte oder dem Gegenstand, an dem die Leuchte montiert werden soll. Der plattenförmige Einführabschnitt kann so optimal für die Rastverbindung ausgerichtet werden, während der andere Schenkel als Montagefläche oder zur Aufnahme weiterer Befestigungselemente dient.

Eine weitere vorteilhafte Ausgestaltung sieht vor, dass der Rastkörper quer zur Plattenebene des plattenförmigen Einführabschnitts auslenkbar ist. Dies ermöglicht eine kompakte Bauweise, da die Auslenkbewegung senkrecht zur Einführrichtung und zur Hauptfläche des Einführabschnitts erfolgt. Die Rastausnehmung kann entsprechend als einfache Durchbrechung oder Vertiefung in der Plattenebene gestaltet sein, und der Rastkörper benötigt keinen zusätzlichen Bauraum in Einführrichtung für seine Auslenkung.

Vorteilhafterweise ist die Rastausnehmung hierbei von einer Durchbrechung im plattenförmigen Einführabschnitt gebildet. Der Rand dieser Durchbrechung bildet dabei einen Anschlag für den Rastkörper, der einem unbeabsichtigten Herausziehen des Einführteils aus dem Halteteil entgegenwirkt. Eine Durchbrechung ist fertigungstechnisch einfach realisierbar, beispielsweise durch Stanzen oder Laserschneiden. Der klar definierte Anschlag durch den Rand der Durchbrechung sorgt für eine hohe Haltekraft in Auszugsrichtung und eine sichere Verrastung.

Um die Rastverbindung bei Bedarf einfach lösen zu können, ist bevorzugt vorgesehen, dass der Schlitz von einer Wand des Halteteils begrenzt ist, die eine Durchbrechung aufweist. Diese Durchbrechung ist so positioniert, dass sie ein Betätigen des Rastkörpers, beispielsweise mit einem Finger oder einem einfachen Werkzeug, zum Lösen der Rastverbindung erlaubt. Dadurch kann die Leuchte schnell und unkompliziert demontiert werden, ohne die Halterung zu beschädigen. Die Zugänglichkeit des Rastkörpers von außen durch die Wand des Halteteils erleichtert die Demontage erheblich und macht die Halterung benutzerfreundlich.

Für eine noch stabilere oder beidseitige Befestigung kann die Halterung so ausgebildet sein, dass das Einführteil einen weiteren plattenförmigen Einführabschnitt aufweist oder ein separates, weiteres Einführteil mit einem weiteren plattenförmigen Einführabschnitt vorgesehen ist. Entsprechend weist das Halteteil dann zwei Einführschlitze auf, in die jeweils der plattenförmige Einführabschnitt bzw. der weitere plattenförmige Einführabschnitt entlang eines jeweiligen Einführwegs einführbar ist. In jeden dieser Einführwege ragt dann ein eigener federnd auslenkbarer Rastkörper des Halteteils, der beim Einführen des jeweiligen Einführabschnitts ausgelenkt wird und in eine zugehörige Rastausnehmung einrastet. Diese doppelte Rastverbindung erhöht die Gesamthaltekraft und die Verdrehsicherheit der Leuchte. Sie eignet sich besonders für größere oder schwerere Leuchten oder wenn eine beidseitige Abstützung gewünscht ist.

Die Erfindung betrifft weiterhin eine Leuchte, die mit einer erfindungsgemäßen Halterung ausgestattet ist. Dabei ist entweder das Halteteil oder das Einführteil fest (aber auch lösbar) an der Leuchte befestigt, während das jeweils andere Teil an einem Gegenstand, beispielsweise einer Wand, Decke oder einem Profil, befestigt wird oder bereits befestigt ist. Durch die Verwendung der erfindungsgemäßen Halterung profitiert die Leuchte von allen oben genannten Vorteilen hinsichtlich einfacher Montage, sicherer Befestigung und leichter Demontage.

In einer besonders praxisnahen Ausführungsform der Leuchte ist das Halteteil an der Leuchte befestigt. Das Einführteil ist dann dazu vorgesehen, an einem Halteprofil des Gegenstands befestigt zu werden, beispielsweise durch Einhängen in dieses Profil. Diese Anordnung ist besonders vorteilhaft für modulare Beleuchtungssysteme oder Anwendungen, bei denen Leuchten häufig an standardisierten Profilen montiert werden, wie z.B. in Regalsystemen, Ladenbau oder abgehängten Deckenkonstruktionen. Das Einhängen des Einführteils ermöglicht eine schnelle Vormontage und eine einfache Endmontage der Leuchte durch simples Einschieben des an der Leuchte befindlichen Halteteils auf das am Profil befestigte Einführteil.

Die Erfindung wird nachfolgend anhand von in der Zeichnung schematisch dargestellten Ausführungsbeispielen näher erläutert. In dieser zeigen
**Fig.** 1 eine perspektivische Darstellung einer ersten Ausführungsform der erfindungsgemäßen Halterung, bestehend aus einem Halteteil und einem Einführteil, vor dem Einführen;
**Fig. 2** eine perspektivische Ansicht der in Fig. 1 gezeigten Halterung im montierten Zustand;
**Fig. 3** eine Schnittansicht der in Fig. 1 und Fig. 2 gezeigten Halterung im montierten Zustand, entlang einer Schnittebene durch den Rastkörper und die Rastausnehmung;
**Fig. 4** eine perspektivische Ansicht einer zweiten Ausführungsform eines Halteteils mit zwei Einführschlitzen und zwei zugehörigen Einführteilen; und
**Fig. 5** eine perspektivische Ansicht einer Leuchte, die mittels einer erfindungsgemäßen Halterung an einem Halteprofil befestigt ist.

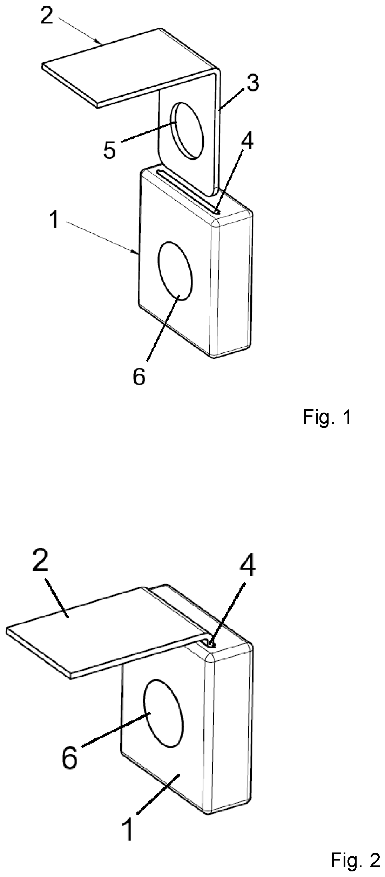

In **Fig. 1** ist eine erste Ausführungsform einer erfindungsgemäßen Halterung dargestellt. Die Halterung umfasst ein quaderförmiges Halteteil **1** und ein Einführteil **2.** Das Einführteil **2** weist einen im Wesentlichen L-förmigen Querschnitt auf, dessen einer Schenkel von einem plattenförmigen Einführabschnitt **3** gebildet ist. Der andere, hier horizontal verlaufende Schenkel des Einführteils **2** dient beispielsweise zur Befestigung. Das Halteteil **1** weist einen Einführschlitz **4** auf, der dazu ausgebildet ist, den plattenförmigen Einführabschnitt **3** des Einführteils **2** aufzunehmen. Im plattenförmigen Einführabschnitt **3** ist eine Rastausnehmung **5,** hier in Form einer kreisförmigen Durchbrechung, vorgesehen. Das Halteteil **1** weist ebenfalls eine Durchbrechung **6** auf, die zum Betätigen eines Rastkörpers dienen kann.

**Fig. 2** zeigt die in Fig. 1 dargestellte Halterung im montierten Zustand in einer perspektivischen Ansicht. Das Einführteil **2** ist mit seinem plattenförmigen Einführabschnitt **3** vollständig in den Einführschlitz **4** des Halteteils **1** eingeführt und verrastet. Es ist weiters die Durchbrechung **6** im Halteteil **1** sichtbar.

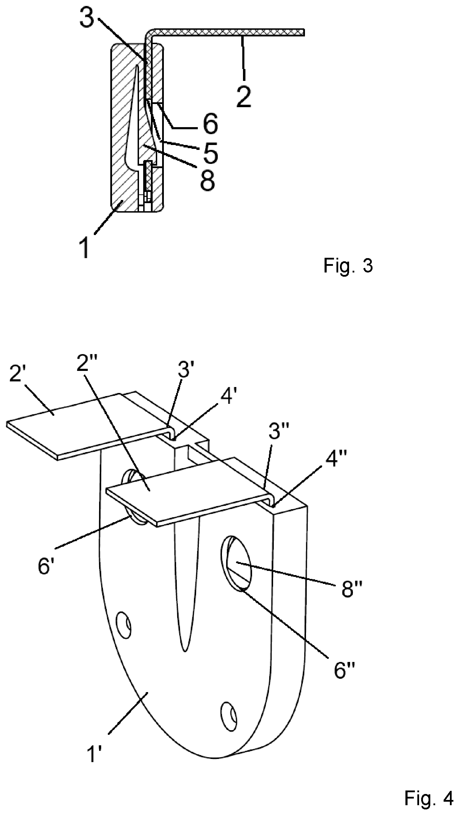

**Fig. 3** zeigt eine Schnittansicht der in Fig. 1 und Fig. 2 dargestellten Halterung im montierten Zustand. Man erkennt das Halteteil **1** und das darin aufgenommene Einführteil **2** mit seinem plattenförmigen Einführabschnitt **3.** Der plattenförmige Einführabschnitt **3** ist in den Einführschlitz **4** des Halteteils **1** eingeführt. Im Inneren des Halteteils **1** ist ein federnd auslenkbarer Rastkörper **8** angeordnet, der in die Rastausnehmung **5** des plattenförmigen Einführabschnitts **3** eingreift und diesen somit im Halteteil **1** verrastet. Der Rastkörper **8** ist hier als ein federnder Arm ausgebildet, der quer zur Plattenebene des Einführabschnitts **3** auslenkbar ist. Man erkennt, dass der plattenförmige Einführabschnitt **3** im Bereich, der die Rastausnehmung **5** umläuft, im Schlitz **4** aufgenommen ist, was zu einer stabilen und spielfreien Verbindung führt.

**Fig. 4** zeigt eine alternative Ausführungsform eines Halteteils **1',** das U-förmig gestaltet ist und zwei gegenüberliegende Einführschlitze **4'** und **4''** aufweist. In diese Einführschlitze **4', 4''** sind die plattenförmigen Einführabschnitte **3'** bzw. **3''** von zwei separaten Einführteilen **2'** bzw. **2''** einführbar. Jedes Einführteil **2', 2''** ist wiederum L-förmig ausgebildet. Dabei verfügt auch dieses Halteteil **1'** über entsprechende Rastkörper **8,** die in Rastausnehmungen der Einführabschnitte **3', 3''** einrasten.

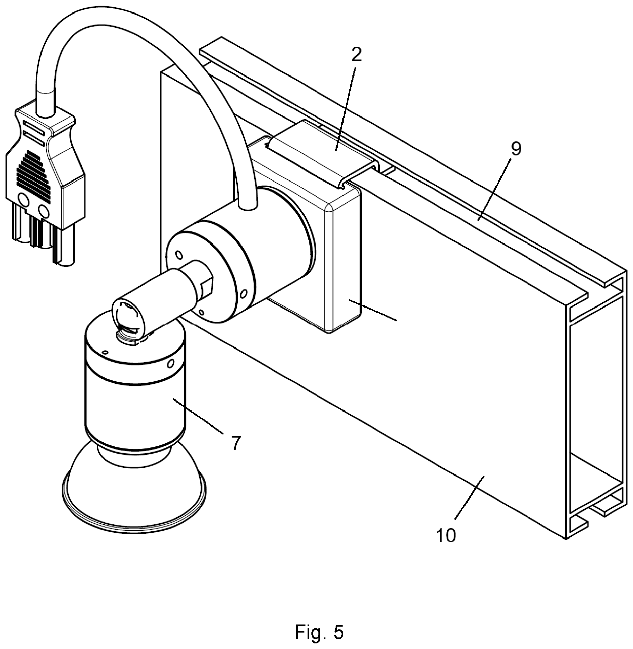

**Fig. 5** illustriert eine Anwendung der erfindungsgemäßen Halterung. Eine Leuchte **7** ist an einem Halteteil **1** (hier als das quaderförmige Bauteil erkennbar, das direkt an der zylindrischen Basis der Leuchte **7** befestigt ist) befestigt. Das zugehörige Einführteil **2** (hier als L-förmiger Winkel erkennbar) ist seinerseits an einem Halteprofil **9,** beispielsweise einer Profilschiene **10,** befestigt bzw. in dieses eingehängt. Die Leuchte **7** kann somit durch einfaches Einführen des Einführabschnitts des am Halteprofil **9** montierten Einführteils **2** in den Einführschlitz **4** des Halteteils **1** schnell und sicher montiert werden. Die Verrastung erfolgt wie in Fig. 3 dargestellt.

## Patentansprüche

1. Halterung für eine Leuchte (7) umfassend ein Halteteil (1; 1') und ein Einführteil (2; 2'; 2''), wobei das Halteteil (1; 1') einen Einführschlitz (4; 4'; 4'') aufweist, in den ein plattenförmiger Einführabschnitt (3; 3'; 3'') des Einführteils (2; 2'; 2'') entlang eines Einführwegs einführbar ist, wobei in den Einführweg ein federnd auslenkbarer Rastkörper (8) des Halteteils (1; 1') ragt, der beim Einführen des plattenförmigen Einführabschnitts (3; 3'; 3'') federnd ausgelenkt wird und in eine Rastausnehmung (5) des plattenförmigen Einführabschnitts (3; 3'; 3'') einrastet.

2. Halterung nach Anspruch 1, **dadurch gekennzeichnet, dass** der plattenförmige Einführabschnitt (3; 3'; 3'') im eingerasteten Zustand im Wesentlichen spielfrei und formschlüssig im Schlitz (4; 4'; 4'') angeordnet ist.

3. Halterung nach Anspruch 1 oder 2, **dadurch gekennzeichnet, dass** der plattenförmige Einführabschnitt (3; 3'; 3'') im eingerasteten Zustand so im Schlitz (4; 4'; 4'') angeordnet ist, dass der Einführabschnitt (3; 3'; 3'') rund um die Rastausnehmung (5) im Schlitz (4; 4'; 4'') aufgenommen ist.

4. Halterung nach Anspruch 1, 2 oder 3, **dadurch gekennzeichnet, dass** das Einführteil (2; 2'; 2'') einen im Wesentlichen L-förmigen Querschnitt aufweist, dessen einer Schenkel von dem plattenförmigen Einführabschnitt (3; 3'; 3'') gebildet ist.

5. Halterung nach einem der Ansprüche 1 bis 4, **dadurch gekennzeichnet, dass** der Rastkörper (8) quer zur Plattenebene des plattenförmigen Einführabschnitts (3; 3'; 3'') auslenkbar ist.

6. Halterung nach einem der Ansprüche 1 bis 5, **dadurch gekennzeichnet, dass** die Rastausnehmung (5) von einer Durchbrechung gebildet ist, deren Rand einen entgegen eines Herausziehens des Einführteils (2; 2'; 2'') aus dem Halteteil (1; 1') wirkenden Anschlag für den Rastkörper (8) ausbildet.

7. Halterung nach einem der Ansprüche 1 bis 6, **dadurch gekennzeichnet, dass** der Schlitz (4; 4'; 4'') von einer Wand des Halteteils (1; 1') begrenzt ist, die eine Durchbrechung (6) aufweist, welche ein Betätigen des Rastkörpers (8) zum Lösen der Rastverbindung erlaubt.

8. Halterung nach einem der Ansprüche 1 bis 7, **dadurch gekennzeichnet, dass** das Einführteil (2) einen weiteren plattenförmigen Einführabschnitt aufweist oder ein weiteres Einführteil (2'') mit einem weiteren plattenförmigen Einführabschnitt (3'') vorgesehen ist, wobei das Halteteil (1') zwei Einführschlitze (4', 4'') aufweist, in die jeweils der plattenförmige Einführabschnitt (3') bzw. der weitere plattenförmige Einführabschnitt (3'') entlang eines jeweiligen Einführwegs einführbar ist, wobei in den Einführweg jeweils ein federnd auslenkbarer Rastkörper (8) des Halteteils (1') ragt, der beim Einführen des plattenförmigen Einführabschnitts (3') bzw. des weiteren plattenförmigen Einführabschnitts (3'') federnd ausgelenkt wird und in eine Rastausnehmung (5) des plattenförmigen Einführabschnitts (3') bzw. des weiteren plattenförmigen Einführabschnitts (3'') einrastet.

9. Leuchte (7) mit einer Halterung nach einem der Ansprüche 1 bis 8, wobei das Halteteil (1; 1') oder das Einführteil (2; 2'; 2'') an der Leuchte (7) befestigt ist und das jeweils andere Teil an einem Gegenstand befestigt ist.

10. Leuchte (7) nach Anspruch 9, **dadurch gekennzeichnet, dass** das Halteteil (1; 1') an der Leuchte (7) befestigt ist und das Einführteil (2; 2'; 2'') an einem Halteprofil (9) des Gegenstands befestigt, vorzugsweise in dieses eingehängt ist.
